# EUROPEAN PATENT APPLICATION

(11) **EP 4 645 021 A1**
(43) Date of publication of application: **05.11.2025**
(21) Application number: 23911874.8
(22) Date of filing: 20.12.2023
(51) Int. Cl.: G05D 1/43, B65G 1/00, G05D 1/667

(54) **UNMANNED CARRIER VEHICLE AND UNMANNED CARRIER VEHICLE SYSTEM**

(30) Priority: 28.12.2022 JP 2022212697
(71) Applicant: KYOCERA Document Solutions Inc., Osaka-shi, Osaka 540-8585 (JP)
(72) Inventor: TAMAKI, Kaname, Osaka-shi, Osaka 540-8585 (JP); MASAKI, Eijiro, Osaka-shi, Osaka 540-8585 (JP); OMURA, Hiroyoshi, Osaka-shi, Osaka 540-8585 (JP); KIKUTA, Tomoyuki, Osaka-shi, Osaka 540-8585 (JP); OCHIAI, Masaya, Osaka-shi, Osaka 540-8585 (JP)
(74) Representative: Herrero & Asociados, S.L.
(86) International application number: PCT/JP2023/045629
(87) International publication number: WO 2024/143094

(57) **Abstract**

An automatic guided vehicle (10) includes a plurality of casters (31) and a plurality of drive wheels (32) in contact with a travel surface. Each of the casters (31) is arranged at a location on a bottom of a vehicle body and movably supports the vehicle body on the travel surface, shafts (32A) of the drive wheels (32) are arranged along a virtual straight line (X) and spaced apart from each other on the bottom of the vehicle body, and each of the drive wheels (32) is rotationally driven at a rotational speed in a rotation direction.

## Description

### TECHNICAL FIELD

The present invention relates to an automatic guided vehicle for moving articles and an automatic guided vehicle system using the same and particularly to technology associated with the traveling of an automatic guided vehicle.

### BACKGROUND ART

In recent years, various systems for moving articles using automatic guided vehicles (AGVs) have been proposed. For example, in an automatic guided vehicle system described in Patent Literature 1, when baggage is transported by a conveyor, and the baggage arrives at an end of the conveyor, a nearby automatic guided vehicle is called, the baggage is loaded onto the automatic guided vehicle by a robot, the automatic guided vehicle moves the baggage to a shelf, and the baggage is stored on the shelf.

### Citation List

### Patent Literature

Patent Literature 1: Japanese Unexamined Patent Application Publication No. 2020-123196

### SUMMARY OF INVENTION

Here, a travel direction is changed by changing a direction of a steering wheel in the above-described automatic guided vehicle. However, it is necessary to provide a drive wheel and a steering wheel separately, which makes the configuration and control complicated.

Although a case where a travel direction of the automatic guided vehicle is changed by controlling a rotation direction and a rotational speed of a drive wheel separately for each of a plurality of drive wheels without providing a steering wheel is conceivable, the behavior of the automatic guided vehicle is likely to become unstable when the travel direction changes.

The present invention has been made in consideration of the above circumstances and an objective of the present invention is to stably change a direction or travel direction of an automatic guided vehicle with a simple configuration.

According to an aspect of the present invention, there is provided an automatic guided vehicle including: a plurality of casters and a plurality of drive wheels in contact with a travel surface, each of the casters being arranged at a location on a bottom of a vehicle body and movably supporting the vehicle body on the travel surface, shafts of the drive wheels being aligned in one direction and spaced apart from each other on the bottom of the vehicle body, each of the drive wheels being rotationally driven at a rotational speed in a rotation direction; a travel drive device configured to cause the automatic guided vehicle to travel according to each drive wheel by rotating the drive wheels; and a control device configured to control the travel drive device so that each of the drive wheels rotates at the rotational speed in the rotation direction.

Moreover, according to an aspect of the present invention, there is provided an automatic guided vehicle system including: the automatic guided vehicle according to the present invention; and a conveyor configured to load and transport an article, wherein the automatic guided vehicle includes a travel drive device configured to cause the automatic guided vehicle to travel by rotating the drive wheels of the automatic guided vehicle; a pair of arms provided at positions on the automatic guided vehicle on a downstream side and an upstream side in a direction in which the article is transported by the conveyor when the automatic guided vehicle travels along the conveyor and configured to extend in a direction perpendicular to the direction in which the article is transported, face each other at positions spaced apart by a distance corresponding to a width of the article in the direction in which the article is transported by the conveyor, reciprocate in the perpendicular direction to project outward from the automatic guided vehicle, and retract into the automatic guided vehicle from a projected position; an arm drive device configured to cause each of the arms to reciprocate in the perpendicular direction; first claw devices provided on distal-end sides of the pair of arms and configured to project from arm portions at the distal-end sides to a space between the arms and retract into the arm portions; a first claw drive device configured to cause each of the first claw devices to perform projecting and retracting actions; and a control device configured to control the travel drive device, the arm drive device, and the first claw drive device so that the automatic guided vehicle is allowed to travel along the conveyor at a travel speed faster than a transport speed of the article and the arm provided on the upstream side is allowed to project above the conveyor from the automatic guided vehicle, the arm provided on the downstream side is projected above the conveyor from the automatic guided vehicle when the arm provided on the upstream side in the transport direction moves to a position of the article being transported by the conveyor, and each arm is retracted from above the conveyor into the automatic guided vehicle after each first claw device is projected from the distal-end side of each of the arms into the space between the arms in a state in which the article is located between the arms.

According to the present invention, it is possible to stably change a direction or travel direction of an automatic guided vehicle with a simple configuration.

### BRIEF DESCRIPTION OF DRAWINGS

FIG. 1 is a plan view schematically showing an automatic guided vehicle system to which an automatic guided vehicle according to one embodiment of the present invention is applied.
FIG. 2 is a perspective view showing an automatic guided vehicle in the automatic guided vehicle system.
FIG. 3 is a perspective view showing an inner side of a travel device of the automatic guided vehicle.
FIG. 4A is a side view showing a support structure of two drive wheel units closer to the center among four drive wheel units in the travel device.
FIG. 4B is a side view showing a support structure of two drive wheel units on both outer sides among the four drive wheel units.
FIG. 5A is a view showing the rotation of each drive wheel when the automatic guided vehicle is moved forward.
FIG. 5B is a view showing the rotation of each drive wheel when the automatic guided vehicle is moved backward.
FIG. 5C is a view showing the rotation of each drive wheel when the automatic guided vehicle is turned to the right.
FIG. 5D is a view showing the rotation of each drive wheel when the automatic guided vehicle is turned to the left.
FIG. 5E is a view showing the rotation of each drive wheel when the automatic guided vehicle is rotated to the right.
FIG. 5F is a view showing the rotation of each drive wheel when the automatic guided vehicle is rotated to the left.
FIG. 6 is a perspective view showing a sliding state of each arm of the automatic guided vehicle.
FIG. 7 is a view schematically showing a rack gear and a pinion gear for reciprocating the arm.
FIGS. 8A and 8B are a perspective view and a plan view showing a mechanism for projecting and retracting a first claw device and a second claw device of each arm.
FIG. 9 is a block diagram showing a control system of the automatic guided vehicle.
FIG. 10 is a flowchart showing a control procedure for transferring a case being transported by a first conveyor to the automatic guided vehicle and moving the case with the automatic guided vehicle.
FIG. 11A is a perspective view showing a state in which the case is being transported by the first conveyor.
FIG. 11B is a perspective view showing a state in which the automatic guided vehicle has caught up with the case being transported by the first conveyor.
FIG. 12 is a perspective view showing a state in which one arm of the automatic guided vehicle located on an upstream side in a transport direction of the case comes into contact with the case being transported by the first conveyor.
FIG. 13A is a perspective view showing a state in which the case being transported by the first conveyor is sandwiched between the arms of the automatic guided vehicle.
FIG. 13B is a perspective view showing a process in which the case being transported by the first conveyor is being transferred to the automatic guided vehicle.
FIG. 14 is a perspective view showing a state in which the case being transported by the first conveyor is sandwiched between arms of the automatic guided vehicle and the first claw device on the inner side of a distal end of each arm is projected.
FIG. 15 is a perspective view showing the automatic guided vehicle carrying the case transferred from the first conveyor.
FIG. 16 is a perspective view showing a state in which the automatic guided vehicle has stopped in front of a storage shelf.
FIG. 17 is a perspective view showing a state in which the case is sandwiched between the arms of the automatic guided vehicle and the second claw device on the inner side of the rear end of each arm is projected.
FIG. 18 is a perspective view showing a process for transferring a case from the automatic guided vehicle to the storage shelf.
FIG. 19 is a perspective view showing the automatic guided vehicle from which the case has been transferred to the storage shelf.
FIG. 20 is a perspective view showing a state in which the case has been transferred from the automatic guided vehicle to the storage shelf.
FIG. 21A is a view showing another embodiment of the support structure for the drive wheel unit and is a side view showing the support structure for the two drive wheel units closer to the center among the four drive wheel units in the travel device.
FIG. 21B is a view showing another embodiment of the support structure for the drive wheel unit and is a side view showing the support structure for the two drive wheel units on both outer sides among four drive wheel units.
FIG. 22 is a perspective view showing a spring pressure adjustment mechanism used in another embodiment of the support structure for the drive wheel unit.
FIG. 23 is an enlarged side view showing the spring pressure adjustment mechanism attached to a frame member.

### DESCRIPTION OF EMBODIMENTS

Hereinafter, embodiments of the present invention will be described with reference to the drawings.

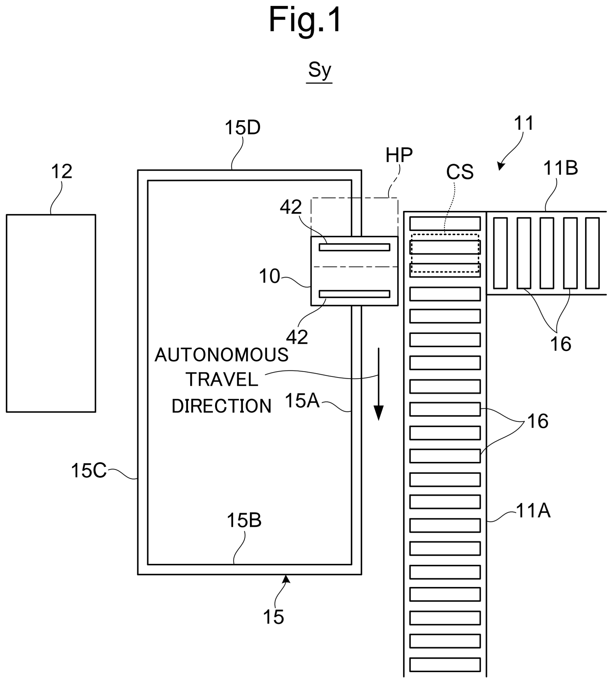

FIG. 1 is a schematic diagram showing an automatic guided vehicle system according to an embodiment of the present invention. An automatic guided vehicle system Sy shown in FIG. 1 includes an automatic guided vehicle 10 and a conveyor 11 for transporting articles. The automatic guided vehicle system Sy is installed in an indoor space such as a warehouse including storage shelves 12.

The automatic guided vehicle 10 autonomously travels along a travel line 15 laid on a floor surface. For example, the travel line 15 is a magnetic tape attached to the floor surface and a magnetic sensor for detecting the magnetic tape is provided on the automatic guided vehicle 10. The automatic guided vehicle 10 detects a position of the magnetic tape (the travel line 15) with the magnetic sensor and performs steering control in accordance with the position of the travel line 15 to cause the automatic guided vehicle 10 to travel along the travel line 15. Alternatively, the travel line 15 is a colored tape attached to the floor surface and has a color or reflectance different from that of the floor surface. An optical sensor such as a CCD for detecting the colored tape is provided in the automatic guided vehicle 10. In the automatic guided vehicle 10, a control device (to be described below) detects the position of the colored tape (the travel line 15) on the basis of information obtained from the optical sensor and performs the steering control according to the position of the travel line 15 to cause the automatic guided vehicle 10 to travel along the travel line 15. Both a method using the magnetic tape and the magnetic sensor and a method using the colored tape and the optical sensor are known technologies.

The conveyor device 11 includes a first conveyor 11A and a second conveyor 11B connected to one end of the first conveyor 11A. Both the first conveyor 11A and the second conveyor 11B have a plurality of rollers 16 arranged in parallel in a transport direction of a case CS (an example of an article). Each roller 16 is pivotably supported by a frame of the first conveyor 11A and the second conveyor 11B according to a shaft perpendicular to the transport direction of the case CS and is driven to rotate in one direction to transport the case CS on each roller 16. In addition, a belt conveyor may be applied as the first conveyor 11A and the second conveyor 11B.

The travel line 15 is formed by connecting a first travel line 15A, a second travel line 15B, a third travel line 15C, and a fourth travel line 15D in a rectangular shape. Each of the travel lines 15A to 15D is linear. The first travel line 15A extends parallel to the direction in which the first conveyor 11A extends (the direction in which the case CS is transported). The fourth travel line 15D passes near the storage shelf 12.

The automatic guided vehicle 10 starts traveling from a waiting position HP provided near a start edge of the first travel line 15A, travels along the first travel line 15A parallel to the first conveyor 11A, changes the travel direction by 90 degrees at an end edge of the first travel line 15A, and transitions to traveling along the second travel line 15B. The automatic guided vehicle 10 further changes the travel direction by 90 degrees at the end edge of the second travel line 15B and transitions to traveling along the third travel line 15C. The automatic guided vehicle 10 travels along the third travel line 15C to reach the storage shelf 12, and then changes the travel direction by 90 degrees at the end edge of the third travel line 15C, and transitions to traveling along the fourth travel line 15D. The automatic guided vehicle 10 further changes the travel direction by 90 degrees at the end edge of the fourth travel line 15D, transitions to traveling along the first travel line 15A, and returns to the waiting position HP near the start edge of the first travel line 15A.

Moreover, the automatic guided vehicle 10 travels along the first travel line 15A in parallel to the first conveyor 11A, transfers the case CS being transported by the first conveyor 11A to the automatic guided vehicle 10 as described in detail below, and moves the case CS.

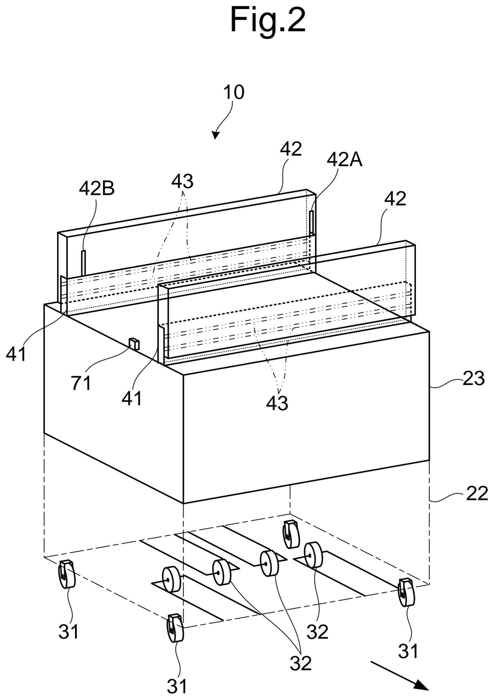

FIG. 2 is an enlarged perspective view schematically showing the automatic guided vehicle 10. As shown in FIG. 2, the automatic guided vehicle 10 has a configuration in which a travel device 22 is provided on a lower side of the vehicle body and a working device 23 is provided on an upper side of the vehicle body.

Casters (also referred to as swivel casters) are provided at four corners of the bottom of the travel device 22, and four drive wheels 32 are provided at a distance from each other on an inner side of the bottom of the travel device 22. The casters 31 are rotatably attached to a frame 25, and directions of wheel parts of the casters 31 (travel directions of the casters 31) can be freely switched.

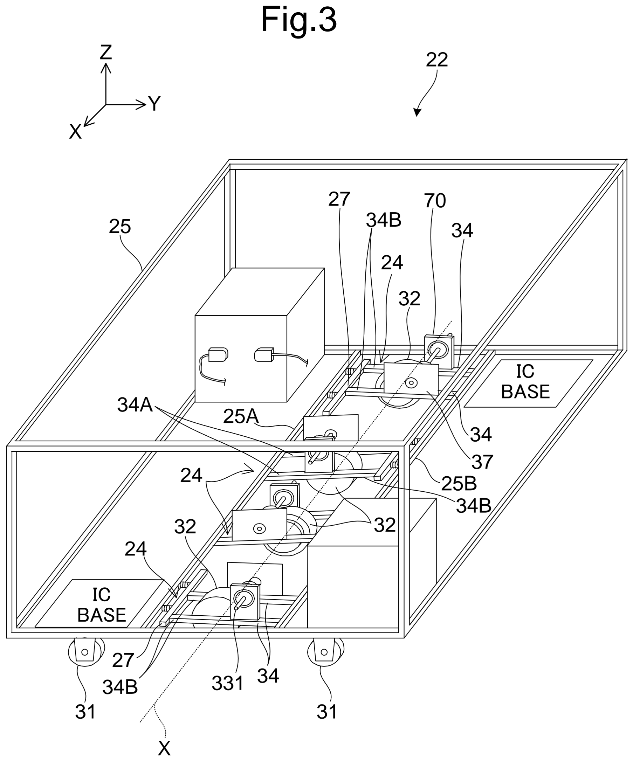

FIG. 3 is a perspective view showing an inner side of the travel device 22. As shown in FIG. 3, the travel device 22 has a rectangular parallelepiped frame 25 formed by combining frame members in a vertical direction (a Y direction in FIG. 3), a horizontal direction (an X direction in FIG. 3), and a height direction (a Z direction in FIG. 3). Two frame members 25A and 25B are provided stretching parallel to each other on the frame part of the bottom formed by the frame 25. Four drive wheel units 24 are provided between the frame members 25A and 25B.

The drive wheel unit 24 includes a pair of support members 34 extending in a direction perpendicular to the frame members 25A and 25B, a connecting member 27 that connects between the pair of support members 34 parallel to each other and connects and fixes ends 34B of the support members 34, a drive wheel 32 provided between the pair of support members 34, a drive shaft 32A of the drive wheel 32 whose both ends are supported by the pair of support members 34, and a coil spring 36 that connects the connecting member 27 to the frame member 25A or 25B. A rotational drive force is supplied to the drive wheel 32 of each drive wheel unit 24 from a travel motor provided on the frame 25.

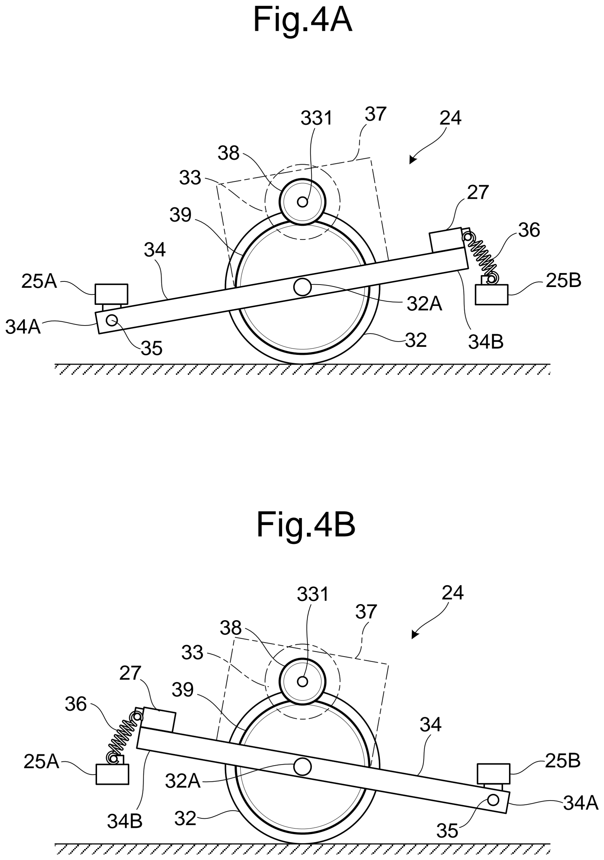

The shafts 32A (shown in FIGS. 2, 4A, and 4B) of the drive wheels 32 are aligned in one direction and spaced apart from each other. In the embodiment shown in FIG. 3, they are arranged parallel to a virtual straight line X and spaced apart from each other. Each drive wheel 32 is rotationally driven by a rotational drive force from a travel drive motor, the automatic guided vehicle 10 travels, and each caster 31 is driven to rotate in association with this travel.

In the travel direction of the automatic guided vehicle 10, each drive wheel 32 is disposed in a central portion between the front caster 31 in the travel direction and the rear caster 31 in the travel direction. That is, each drive wheel unit 24 is provided at a position on the frame 25 where the drive wheels 32 are disposed at this position.

FIG. 4A is a side view showing a support structure of the two drive wheel units 24 in the central portion among the four drive wheel units 24 and FIG. 4B is a side view showing a support structure of the two drive wheel units 24 located on both outer sides of the two drive wheel units 24 in the central portion among the four drive wheel units 24.

In the two central drive wheel units 24 shown in FIG. 4A, an end 34A of each support member 34 (an end opposite to the connecting member 27) is supported by a support shaft 35 provided on one frame member 25A of the frame 25 so that it freely rotates around the support shaft 35. Moreover, both ends of the coil spring 36 made of a tension spring (an example of a biasing member) are connected to the connecting member 27 connecting the ends 34B of the support members 34 and the other frame member 25B of the frame 25.

Moreover, in the two drive wheel units 24 on both sides shown in FIG. 4B, the end 34A of each support member 34 (an end opposite to the connecting member 27) is supported by the support shaft 35 provided on the other frame member 25B of the frame 25 so that it freely rotates around the support shaft 35. Moreover, both ends of the coil spring 36 made of a tension spring are connected to the connecting member 27 connecting the ends 34B of the support members 34 and one frame member 25A of the frame 25.

In addition, in any of the drive wheel units 24, the support shaft 35 rotatably supporting the end 34A of each support member 34 and the shaft 32A of the drive wheel 32 are parallel to each other. Moreover, as seen from the shaft 32A of the drive wheel 32, the support shaft 35 and the coil spring 36 are provided at positions on the opposite side of each support member 34.

In other words, the coil spring 36 biases each support member 34 toward the floor surface (the travel surface) on the opposite side of each support shaft 35 as seen from the shaft 32A of each drive wheel 32. When the automatic guided vehicle 10 is arranged on the travel surface via the casters 31, the coil spring 36 brings each drive wheel 32 into contact with the travel surface.

When the automatic guided vehicle 10 is arranged on the floor surface (the travel surface), the four casters 31 of the travel device 22 support the automatic guided vehicle 10 in a stable state so that it is freely movable. Moreover, in a state in which the automatic guided vehicle 10 is not in contact with the floor surface, the lowest part of the drive wheels 32 of each drive wheel unit 24 is set to be located lower than the lowest part of the casters 31 according to an elastic force of the coil springs 36. When the automatic guided vehicle 10 is arranged on the floor surface via the casters 31 and the casters 31 support the frame 25, each drive wheel unit 24 is pushed by the floor surface and moves upward in an elastic range of the coil spring 36. At this time, the drive wheels 32 of the drive wheel units 24 come into contact with the floor surface with a pressure formed by the elastic force of the coil springs 36 that resists a pressing force from the floor surface. Thereby, the automatic guided vehicle 10 is supported on the floor surface in a stable state so that it is freely movable.

In other words, in the two drive wheel units 24 in the central portion shown in FIG. 4A, when the automatic guided vehicle 10 is placed on the floor surface and the drive wheels 32 are pressed against the floor surface, the support members 34 supporting the drive wheels 32 rotate counterclockwise around the support shafts 35 provided on one of the frame members 25A, and the drive wheels 32 move in a direction away from the floor surface, but the coil springs 36 provided between the connecting members 27 at the ends 34B of the support members 34 and the other frame member 25B extend, the extended coil springs 36 bias the support members 34 around the support shafts 35 in the clockwise direction in FIG. 4A, and the drive wheels 32 are pressed against the floor surface.

Likewise, in the two drive wheel units 24 on both outer sides shown in FIG. 4B, the drive wheels 32 are pressed against the floor surface, and the support members 34 supporting the drive wheels 32 rotate clockwise around the support shafts 35 provided on the other frame member 25B, and the drive wheels 32 move in a direction away from the floor surface, but the coil springs 36 provided between the connecting members 27 at the ends 34B of the support members 34 and one of the frame members 25A extend, and the extended coil springs 36 bias the support members 34 around the support shafts 35 in the counterclockwise direction in FIG. 4B, and the drive wheels 32 are pressed against the floor surface.

Therefore, when the automatic guided vehicle 10 is placed on the floor surface, the automatic guided vehicle 10 is supported in a stable state by the four casters 31 of the travel device 22 so that it is freely movable, and the four drive wheels 32 are pressed against the floor surface.

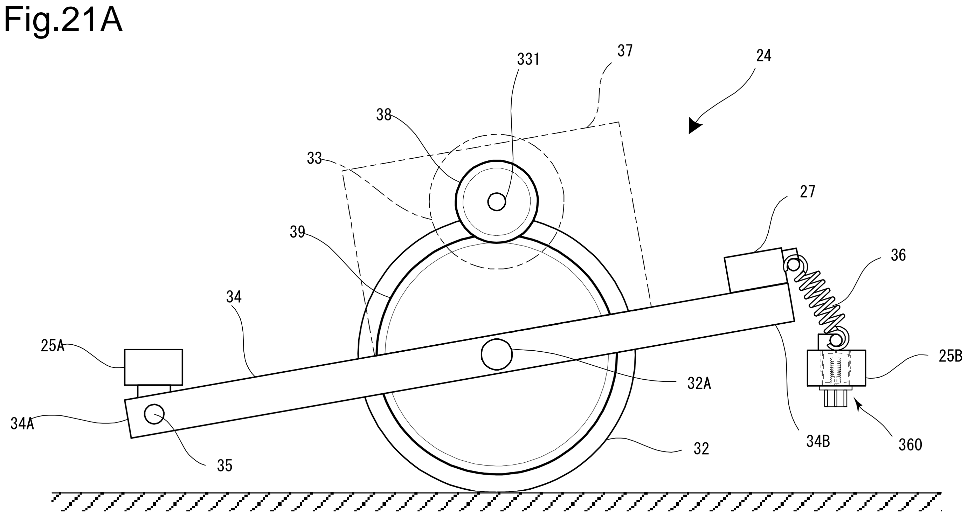

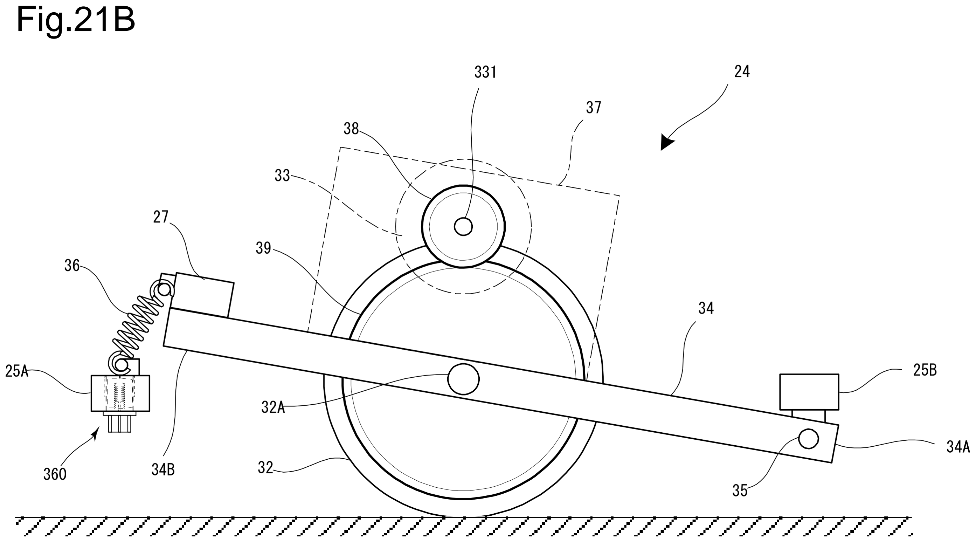

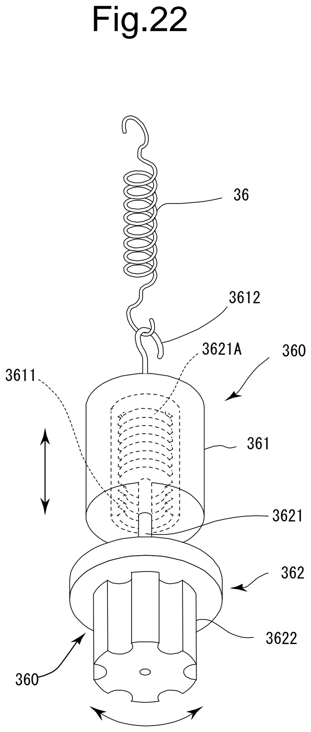

Here, another embodiment of the support structure of the drive wheel unit 24 will be described. FIG. 21 shows another embodiment of the support structure of the drive wheel unit. FIG. 21A is a side view showing a support structure of two drive wheel units closer to the center among the four drive wheel units in the travel device and FIG. 21(B) is a side view showing a support structure of two drive wheel units on both outer sides among the four drive wheel units. FIG. 22 is a perspective view showing a spring pressure adjustment mechanism for use in another embodiment of the support structure of the drive wheel unit.

In the other embodiment, the coil spring 36 in the drive wheel unit 24 is attached to the frame member 25B via a spring pressure adjustment mechanism 360, an example of which is shown in FIG. 22. The spring pressure adjustment mechanism 360 includes an engagement device 361 with which the coil spring 36 is engaged, and a rotation adjustment device 362 that screws into the engagement device 361. The engagement device 361 has a cylindrical body and a hook device 3612 on which the coil spring 36 is hooked on the end of the coil spring 36 side (the upper end in FIGS. 21A, 21B, and 22). Furthermore, the engagement device 361 has a cylindrical cavity with an opening in the bottom formed in the cylindrical body, and a screw groove 3611 is formed on an inner wall thereof. Also, the rotation adjustment device 362 includes a rod-shaped projection member 3621 that enters the cavity of the engagement device 361, and a knob device 3622 that is connected to the projection member 3621 and rotates integrally with the projection member 3621. The distal end of the projection member 3621 is formed with a screw device 3621A having a screw groove that screws into the screw groove 3611. The knob device 3622 rotates in a direction of an arrow in FIG. 22 by a rotational force applied by the user or the operator of the automatic guided vehicle 10 while being held with fingertips.

Moreover, a cylindrical through hole 251 that penetrates the inside in an up-down direction is formed in the frame member 25B in FIGS. 21A and 21B. A diameter of the through hole 251 is slightly larger than a diameter of the engagement device 361. When the spring pressure adjustment mechanism 360 is attached to the frame member 25B, the engagement device 361 of the spring pressure adjustment mechanism 360 is inserted into the through hole 251. At this time, the hook device 3612 is exposed above the frame member 25B, and the other end of the coil spring 36, one end of which is connected to the connecting member 27, is hooked on the exposed hook device 3612.

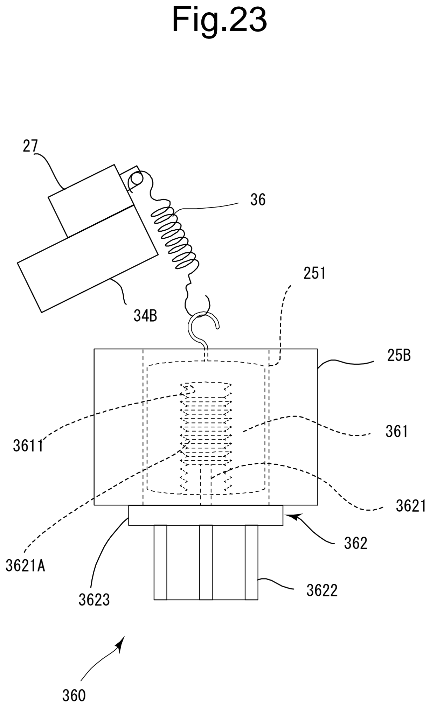

Furthermore, description will be given with reference to FIG. 23. FIG. 23 is an enlarged side view showing a state in which the spring pressure adjustment mechanism is attached to the frame member. The projection member 3621 of the rotation adjustment device 362 is inserted from below the frame member 25B into the cavity of the engagement device 361 that has been inserted into the frame member 25B. At this time, as the knob device 3622 is rotated in one direction, the screw device 3621A also rotates, and the screw device 3621A screws into the screw groove 3611 while the projection member 3621 enters the cavity of the engagement device 361. Here, a disk-shaped device 3623 that is a part of the knob device 3622 and comes into contact with the frame member 25B is disk-shaped, and a portion facing the frame member 25B has a flat surface. The disk-shaped device 3623 has a larger diameter than the cavity of the engagement device 361. Therefore, when the projection member 3621 enters the cavity of the engagement device 361 in a state in which the coil spring 36 is hooked on the hook device 3612, the disk-shaped device 3623 comes into surface contact with the lower surface of the frame member 25B.

When the disk-shaped device 3623 comes into surface contact with the lower surface of the frame member 25B in this way, the spring pressure adjustment mechanism 360 is pulled toward the coil spring 36 side by the tensile force of the coil spring 36, but the knob device 3622 of the rotation adjustment device 362 comes into contact with the lower surface of the frame member 25B, such that the spring pressure adjustment mechanism 360 is engaged with the frame member 25B.

When the spring pressure adjustment mechanism 360 is in this state, if the user or operator further turns the knob device 3622 in the above-described one direction and further moves the projection member 3621 into the cavity of the engagement device 361, because the coil spring 36 is pulled toward the frame member 25B side, the force of the coil spring 36 pressing the support member 34 and the drive wheel 32 against the floor surface becomes stronger as much as the projection member 3621 is further inserted into the above-described cavity.

Moreover, if the user or operator turns the knob device 3622 in a direction opposite to the above-described one direction and moves the projection member 3621 in a direction in which the projection member 3621 retracts from the above-described cavity of the engagement device 361, because the force of pulling the coil spring 36 toward the frame member 25B side becomes weak, the force of the coil spring 36 pressing the support member 34 and the drive wheel 32 against the floor surface becomes weaker as much as the projection member 3621 is moved in a retracting direction from the above-described cavity.

Thereby, when the user or operator rotates the knob device 3622 in the above-described one direction or the opposite direction, it becomes possible to adjust the force with which the support members 34 and the drive wheels 32 are pressed against the floor surface in accordance with a weight of the baggage to be loaded onto the automatic guided vehicle 10. For example, when the weight of the baggage to be loaded onto the automatic guided vehicle 10 is relatively light, it is possible to increase the force with which the support members 34 and the drive wheels 32 are pressed against the floor surface, thereby ensuring the grip force of the drive wheels 32 against the ground and the like.

Moreover, in each drive wheel unit 24, a support plate 37 projects from one of the pair of support members 34 that support the shafts 32A of the drive wheels 32. A travel drive motor 33 is attached to the support plate 37. The rotating shaft 331 that transmits the driving force from the travel drive motor 33 is stretched between the support plate 37 and a bearing device 70 (FIG. 3) provided on the other of the support members 34 on which the support plate 37 is provided, and is pivotably supported by the support plate 37 and the bearing device 70. A small gear 38 is fixed to the rotating shaft 331. The small gear 38 is meshed with a large gear 39 fixed to the shaft 32A of the drive wheel 32. Thereby, the rotation of the rotating shaft 331 is transmitted from the small gear 38 to the large gear 39 (and the drive wheel 32) and the drive wheel 32 rotates.

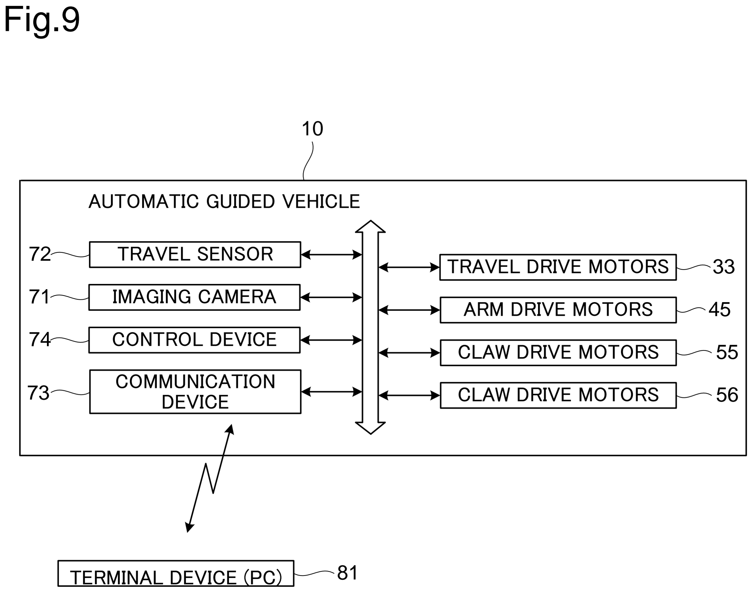

A control device 74 (FIG. 9) controls the rotational speed and the rotation direction of the travel drive motor 33 for each drive wheel unit 24. Thereby, the rotational speed of the drive wheel 32 is adjusted and the rotation direction of the drive wheel 32 is switched.

In a state in which each drive wheel 32 is pressed against the floor surface, when the rotational speed of the drive wheel 32 is adjusted according to the control of the travel drive motor 33 for each drive wheel unit 24 and the rotation direction of the drive wheel 32 is switched, the automatic guided vehicle 10 travels and each caster 31 is driven and rotated, each caster 31 changes a direction of its wheel part according to a change in the travel direction of the automatic guided vehicle 10, and the automatic guided vehicle 10 travels in the travel direction determined by the rotational speed and the rotation direction that have been controlled.

By adopting the drive wheel unit 24 configured as described above, it is possible to stably change a direction or travel direction of the automatic guided vehicle with the simple configuration according to the present embodiment.

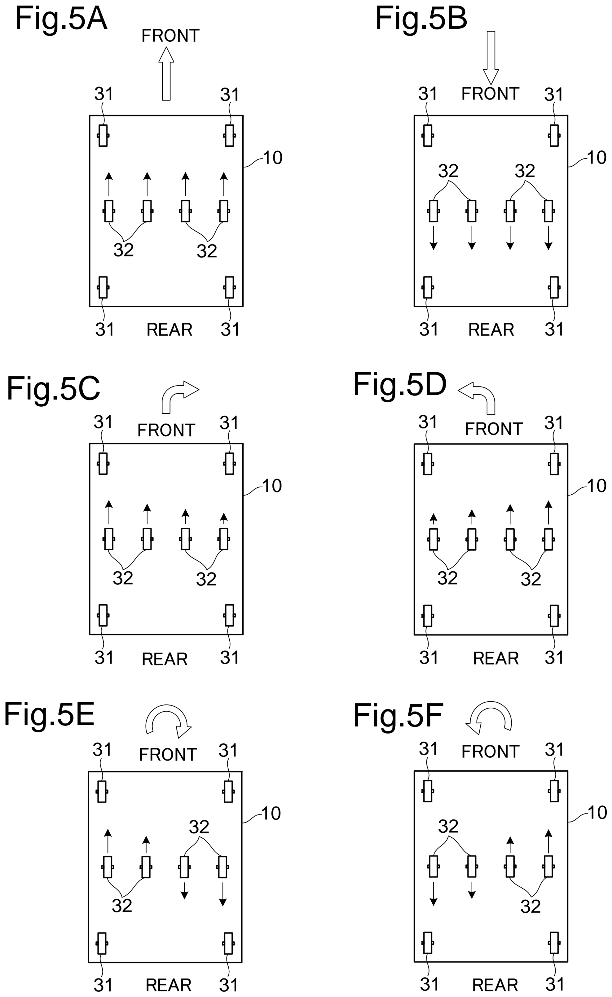

Next, the travel control of the automatic guided vehicle 10 will be described. Arrows in FIGS. 5A to 5F indicate the travel directions of the automatic guided vehicle 10.

As shown in FIG. 5A, when the automatic guided vehicle 10 is moved straight forward (or moved forward), the control device 74 causes all travel drive motors 33 of the four drive wheel units 24 to rotate in the same certain direction at the same rotational speed. The certain direction is set to rotate the four drive wheels 32 in a direction in which the automatic guided vehicle 10 moves forward (hereinafter referred to as a forward direction).

When the automatic guided vehicle 10 is moved straight backward (or moved backward) as shown in FIG. 5B, the control device 74 rotates all the travel drive motors 33 of the four drive wheel units 24 at the same rotational speed in a direction opposite to the certain direction.

When the automatic guided vehicle 10 is turned to the right as shown in FIG. 5C, the control device 74 rotates the travel drive motors 33 of the two left drive wheel units 24 in FIG. 5C in the above-described certain direction at a predetermined first rotational speed, thereby rotating the two left drive wheels 32 in the forward direction. Together with this, the control device 74 rotates the travel drive motors 33 of the two right drive wheel units 24 in the above-described certain direction at a predetermined second rotational speed slower than the above-described first rotational speed in FIG. 5C, thereby rotating the two right drive wheels 32 in the forward direction. Alternatively, the control device 74 stops the travel drive motors 33 of the two right drive wheel units 24 and stops the two right drive wheels 32. Furthermore, the control device 74 may control the travel drive motors 33 of the drive wheel units 24 so that the rotational speed of the left outer drive wheel 32 is the fastest, the rotational speed of the left inner drive wheel 32 is the second fastest, the rotational speed of the right inner drive wheel 32 is the third fastest, and the rotational speed of the right outer drive wheel 32 is the slowest or its rotation stops. The control device 74 appropriately controls the rotational speeds of the four drive wheels 32, such that a rotation radius of the automatic guided vehicle 10 can be changed.

When the automatic guided vehicle 10 is turned to the left as shown in FIG. 5D, the control device 74 rotates the travel drive motors 33 of the two right drive wheel units 24 in FIG. 5D in the above-described certain direction at a predetermined first rotational speed, thereby rotating the two right drive wheels 32 in the forward direction. Together with this, the control device 74 rotates the travel drive motors 33 of the two left drive wheel units 24 in FIG. 5D in the above-described certain direction at a predetermined second rotational speed slower than the first rotational speed, thereby rotating the two left drive wheels 32 in the forward direction. Alternatively, the control device 74 stops the travel drive motors 33 of the two left drive wheel units 24, thereby stopping the two left drive wheels 32. Furthermore, the control device 74 may control the travel drive motors 33 of the drive wheel units 24 so that the rotational speed of the right outer drive wheel 32 is the fastest, the right inner drive wheel 32 is the second fastest, the left inner drive wheel 32 is the third fastest, and the left outer drive wheel 32 is the slowest or its rotation stops. Even in this case, the control device 74 appropriately controls the rotational speeds of the four drive wheels 32 so that it is possible to change the rotation radius of the automatic guided vehicle 10.

When the automatic guided vehicle 10 is rotated to the right as shown in FIG. 5E, the travel drive motors 33 of the two left drive wheel units 24 in FIG. 5E are rotated in the above-mentioned certain direction at the first rotational speed, and the two left drive wheels 32 are rotated in the forward direction. Together with this, the control device 74 rotates the travel drive motors 33 of the two right drive wheel units 24 in FIG. 5E in a direction opposite to the above-described certain direction, thereby rotating the two right drive wheels 32 in a direction opposite to the above-described forward direction. At this time, the rotational speeds of the two left/right inner drive wheels 32 are slower than the rotational speeds of the two left/right outer drive wheels 32, thereby changing the rotational (the above-described right rotation) speed of the automatic guided vehicle 10 according to a rotational speed difference.

When the automatic guided vehicle 10 is rotated to the left as shown in FIG. 5F, the travel drive motors 33 of the two right drive wheel units 24 are rotated in the above-described certain direction at the first rotational speed in FIG. 5F, thereby rotating the two right drive wheels 32 in the forward direction. Together with this, the control device 74 rotates the travel drive motors 33 of the two left drive wheel units 24 in FIG. 5F in a direction opposite to the above-described certain direction, thereby rotating the two left drive wheels 32 in a direction opposite to the forward direction. Even in this case, the rotational (the above-described left rotation) speed of the automatic guided vehicle 10 can be changed with a rotational speed difference by slowing down the rotational speeds of the two left/right inner drive wheels 32 relative to the rotational speeds of the two left/right outer drive wheels 32.

Thus, the automatic guided vehicle 10 can be moved forward, moved backward, turned to the right (right turn), turned to the left (left turn), rotated to the right, and rotated to the left by controlling the rotational speeds and the rotation directions of the travel drive motors 33 of the four drive wheel units 24. Moreover, the four casters 31 change their directions according to the travel direction of the automatic guided vehicle 10 and support the automatic guided vehicle 10 stably and movably. Thereby, it is possible to change the direction or travel direction of the automatic guided vehicle 10.

Next, a transport operation of the case CS by the automatic guided vehicle 10 will be described. As shown in FIG. 2, a pair of support walls 41 are arranged opposite to each other on the upper surface of the working device 23 of the automatic guided vehicle 10 and provided to be projected therefrom. Each support wall 41 supports an arm 42 on its upper portion and outer side wall. Each arm 42 is, for example, a hollow housing-like member, and is supported by each support wall 41 via slide rails 43 to be slidable along the support wall 41. A distance between arms 42 is set to a predetermined distance that is slightly longer than the width of the case CS transported by the conveyor device 11, and the case CS can be inserted and sandwiched between the arms 42.

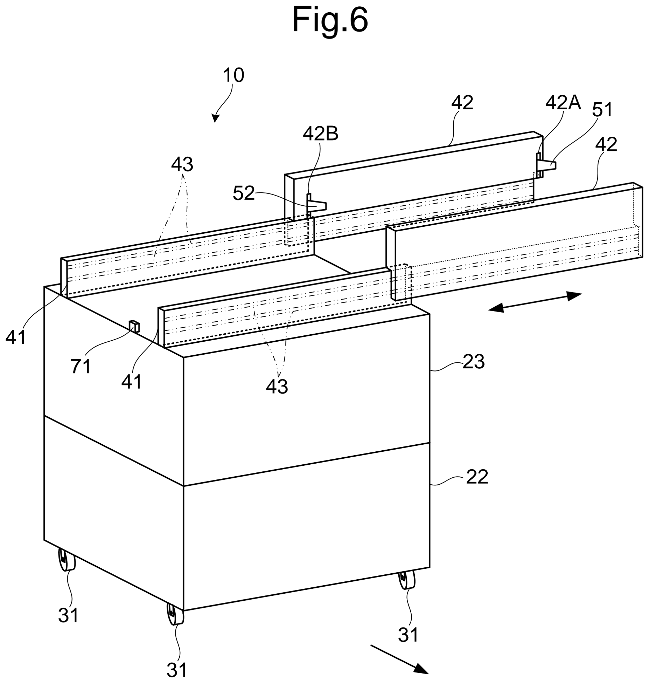

FIG. 6 is a perspective view showing a sliding state of each arm 42. Each arm 42 is slidably supported by two slide rails 43 extending horizontally relative to the support wall 41, each arm 42 is guided in the movement direction, and each arm 42 reciprocates in its longitudinal direction. Each slide rail 43, for example, has a configuration called a three-stage pull, and has a configuration in which its part projects and moves toward the outer side, which is the side of the working device 23. The slide rail 43 has a first rail, which is a part of the slide rail 43 and is provided on the side wall of the support wall 41, and a second rail, which is engaged with and supported by the first rail and guided in the movement direction by the first rail, and moves to the outer side, which is the side of the working device 23. The second rail is attached to the arm 42. Thereby, each arm 42 reciprocates in the horizontal direction and each arm 42 as a whole can project outward from the automatic guided vehicle 10 and can be retracted into the automatic guided vehicle 10 from a projected position.

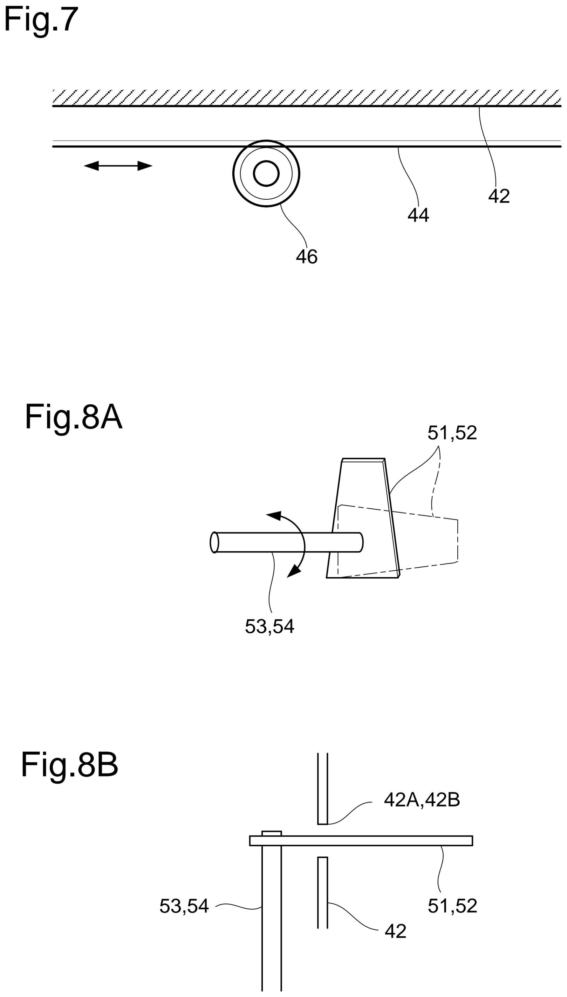

As shown in FIG. 7, a rack gear 44 is provided at a lower end of each arm 42. Moreover, an arm drive motor 45 (shown in FIG. 6) is provided on each support wall 41 and a pinion gear 46 is fixed to the output shaft of each arm drive motor 45. If each arm drive motor 45 rotates back and forth, each pinion gear 46 rotates back and forth, and each rack gear 44 and each arm 42 are guided in the movement direction by the slide rail 43 and reciprocate. In addition, the outward movement of the arm 42 in the movement direction is limited to a position where the arm 42 remains engaged with and supported by the support wall 41 and the slide rail 43, as shown in FIG. 3, according to the engagement of the first and second rails of the slide rails 43 and the rotation control of the arm drive motor 45.

Moreover, as shown in FIGS. 2 and 6, a slit 42A is formed in the side surface portion on the inner side (the side facing the other opposing arm 42) of the distal end of each arm 42 and a first claw device 51, which is projected to the space between the arms 42 through the slit 42A, is provided. Moreover, a slit 42B is formed in the side surface portion on the inner side (the side facing the other opposing arm 42) of the rear end (base end) of the arm 42 and a second claw device 52, which is projected to the space between the arms 42 through the slit 42B, is provided.

As shown in FIGS. 8A and 8B, each first claw device 51 is supported by a rotating shaft 53 inside the hollow housing-like arm 42 and each second claw device 52 is supported by a rotating shaft 54 inside the hollow housing-like arm 42. Each first claw device 51 is rotated back and forth by a claw drive motor 55 (shown in FIG. 6) connected to each rotating shaft 53, and performs an action for projecting from the slit 42A to the space between the arms 42 and an action for moving from the space to retract into the arm 42. Each second claw device 52 is rotated back and forth by a claw drive motor 56 (shown in FIG. 6) connected to each rotating shaft 54, and performs an action for projecting from the slit 42B to the space between the arms 42 and an action for moving from the space to retract into the arm 42.

As shown in FIGS. 2 and 6, an imaging camera 71, for example, made of a CCD or the like, is provided on the working device 23. When the automatic guided vehicle 10 travels along the first travel line 15A in parallel to the first conveyor 11A, the imaging camera 71 is oriented to face the space above the first conveyor 11A. In the present embodiment, the imaging camera 71 is arranged on a proximal-end side of each arm 42 in a central portion of an area sandwiched between the two support walls 41 on the working device 23 in the travel direction of the automatic guided vehicle 10. The imaging camera 71 captures an image of a two-dimensional code (e.g., a QR code (registered trademark)) Q or a mark attached to the case CS transported on the first conveyor 11A. In addition, the imaging camera 71 may be arranged at a position on the outer side of one of the support walls 41 on the working device 23 in the travel direction of the automatic guided vehicle 10 (the outer side of the area between the two support walls 41) as the proximal-end side of each arm 42 or the side wall side facing the other support wall 41 as the upper part of one support wall 41. Furthermore, the imaging camera 71 may be arranged at another position that is a position other than the proximal-end side of each arm 42 as long as it is possible to image a two-dimensional code Q or a mark attached to the case CS to be transported on the first conveyor 11A.

FIG. 9 is a block diagram showing a control system of the automatic guided vehicle 10. As shown in FIG. 9, the automatic guided vehicle 10 includes: the travel drive motors 33 configured to rotate and drive the drive wheels 32 of the travel device 22; the arm drive motors 45 configured to move the arms 42 of the working device 23 in the horizontal direction; the claw drive motors 55 configured to cause the first claw devices 51 to perform an action for projecting from the slits 42A on the inner side of both ends of each arm 42 into the space between the arms 42 and an action for retracting within the arm 42; the claw drive motors 56 configured to cause the second claw devices 52 to perform an action for projecting from the slits 42B on the inner side of both ends of each arm 42 to the space between the arms 42 and an action for retracting within the arm 42; the imaging camera 71 configured to image a two-dimensional code Q attached to the case CS on the first conveyor 11A; the travel line sensor 72 configured to detect the travel line 15; a communication device 73; and the control device 74.

The communication device 73 is a communication interface including a communication module such as a LAN chip (not shown), and is connected to a terminal device 81 via a wired or wireless LAN to transmit and receive data to and from the terminal device 81. The terminal device 81 is, for example, a personal computer (PC), and is operated by the user.

The control device 74 is configured to include a processor, a random-access memory (RAM), a read only memory (ROM), and a dedicated hardware circuit. The processor is, for example, a central processing unit (CPU), an application-specific integrated circuit (ASIC), a micro processing unit (MPU), or the like. The control device 74 integrally controls the automatic guided vehicle 10 according to the operation of the processor in accordance with a control program stored in the ROM.

For example, the control device 74 controls the driving of the travel drive motor 33 for each drive wheel unit 24, adjusts the rotational speeds of the drive wheels 32, switches the rotation directions of the drive wheels 32, changes a travel speed V of the automatic guided vehicle 10, and causes the automatic guided vehicle 10 to move forward, move backward, turn right (right turn), turn left (left turn), rotate right, and rotate left as shown in FIGS. 5A to 5E.

Furthermore, the control device 74 detects the position of the travel line 15 on the basis of the detection output of the travel line sensor 72, and controls the driving of the travel drive motor 33 of the drive wheel 32 for each drive wheel 32 in accordance with the detected position of the travel line 15, adjusts the rotational speed of the drive wheel 32, changes the travel direction of the automatic guided vehicle 10, and performs operation control to cause the automatic guided vehicle 10 to travel along the travel line 15 in a state in which the longitudinal direction of each arm 42 is perpendicular to the travel line 15. Moreover, the control device 74 adjusts the travel speed V of the automatic guided vehicle 10.

Moreover, the control device 74 controls the driving of each arm drive motor 45 so that each arm 42 moves in a reciprocation motion and controls the driving of the claw drive motors 55 and 56 so that claw devices 51 and 52 are projected from the slits 42A and 42B formed on both ends of each arm 42 or are retracted into the arm 42.

Furthermore, the control device 74 acquires an image captured by the imaging camera 71, analyzes the image, and identifies the two-dimensional code Q included in the image.

The automatic guided vehicle 10 configured as described above stops and waits at the waiting position HP under the control of the control device 74 and drives each arm 42 to transfer the case CS being transported by the first conveyor 11A to the automatic guided vehicle 10 while traveling along the first travel line 15A in parallel to the first conveyor 11A if the first conveyor 11A starts the transportation of the case CS. Furthermore, under the control of the control device 74, the automatic guided vehicle 10 travels along a path of the first travel line 15A → the second travel line 15B → the third travel line 15C, moves to the front of the storage shelf 12 and stops, transfers the case CS to the storage shelf 12, travels along a path of the third travel line 15C → the fourth travel line 15D → the first travel line 15A, and returns to the waiting position HP.

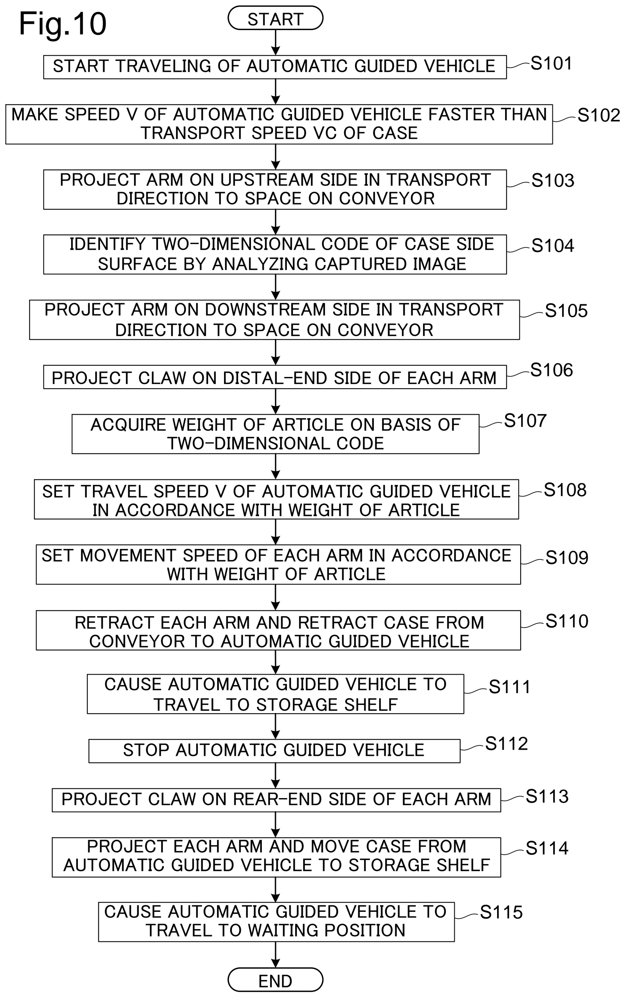

Next, a control procedure for transferring the case CS being transported by the first conveyor 11A to the automatic guided vehicle 10 as described above and moving the case CS with the automatic guided vehicle 10 will be described in detail with reference to the flowchart shown in FIG. 10 and the like.

As shown in FIG. 1, the case CS starts to be transported by the second conveyor 11B in a state in which the automatic guided vehicle 10 is waiting at the waiting position HP of the first travel line 15A. The waiting position HP is set on the side of the position where it is connected to the first conveyor 11A (the starting end of the first conveyor 11A) as the end of the second conveyor 11B. The case CS located on the second conveyor 11B is transported in a posture in which the attached two-dimensional code Q faces the waiting position HP. The case CS transported to a position indicated by a dashed line in FIG. 1 is subsequently transported by the first conveyor 11A in the transport direction switched to the direction of the arrow shown in FIG. 1.

When the case CS is transported to the position indicated by the dashed line in FIG. 1, the automatic guided vehicle 10 located at the waiting position HP captures an image of the two-dimensional code Q of the case CS with the imaging camera 71. The imaging camera 71 of the automatic guided vehicle 10 located at the waiting position HP is provided at a position facing the two -dimensional code Q on the side surface of the case CS. The two-dimensional code Q contains identification information indicating an ID unique to the case CS. In the automatic guided vehicle 10, the control device 74 analyzes the two-dimensional code Q captured by the imaging camera 71 and determines whether an ID indicated in the identification information is the same as an ID indicated in the identification information previously received from the terminal device 81 via the communication device 73.

When the control device 74 determines that the above-described IDs are the same, the automatic guided vehicle 10 starts traveling in the direction of the arrow shown in FIG. 1 (S101). At this time, it is assumed that the case CS has started to be transported by the first conveyor 11A without changing its posture and has already passed the position indicated by the dashed line in FIG. 1, i.e., the waiting position HP.

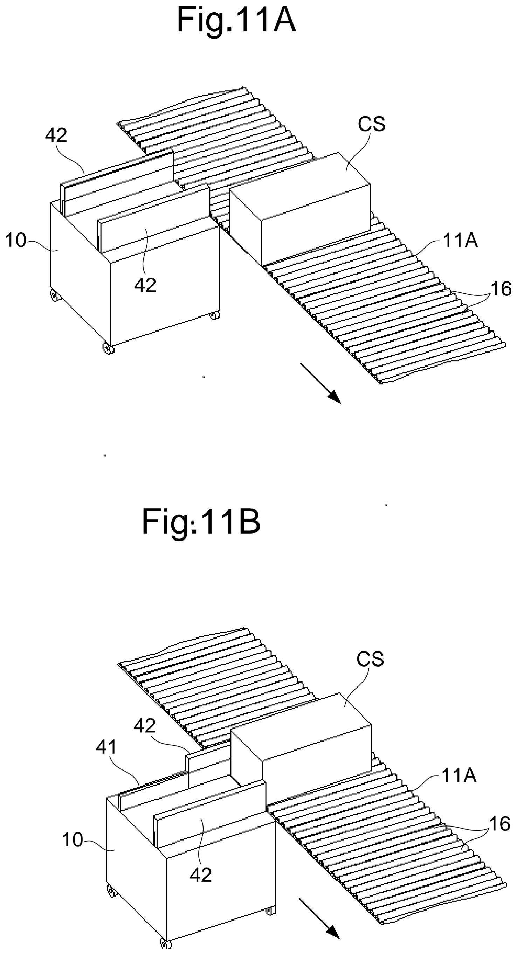

The control device 74 detects the position of the travel line 15 on the basis of the detection output of the travel line sensor 72 and controls the driving of the travel drive motors 33 of the drive wheels 32 in accordance with the detected position of the travel line 15, such that the automatic guided vehicle 10 is allowed to travel along the first travel line 15A in parallel to the first conveyor 11A at a position close to the first conveyor 11A according to a posture in which an extending direction of each arm 42 extends (the longitudinal direction of the arm 42) is perpendicular to the travel line 15, as shown in FIG. 11A (S102). At this time, the control device 74 sets the travel speed V of the automatic guided vehicle 10 to a predetermined travel speed VA faster than the transport speed VC of the case CS in the first conveyor 11A (S102).

Moreover, the control device 74 controls the driving of one of the arm drive motors 45 so that one of the arms 42 located on the upstream side in the transport direction of the case CS is projected to the space above the first conveyor 11A as shown in FIG. 11B (S103).

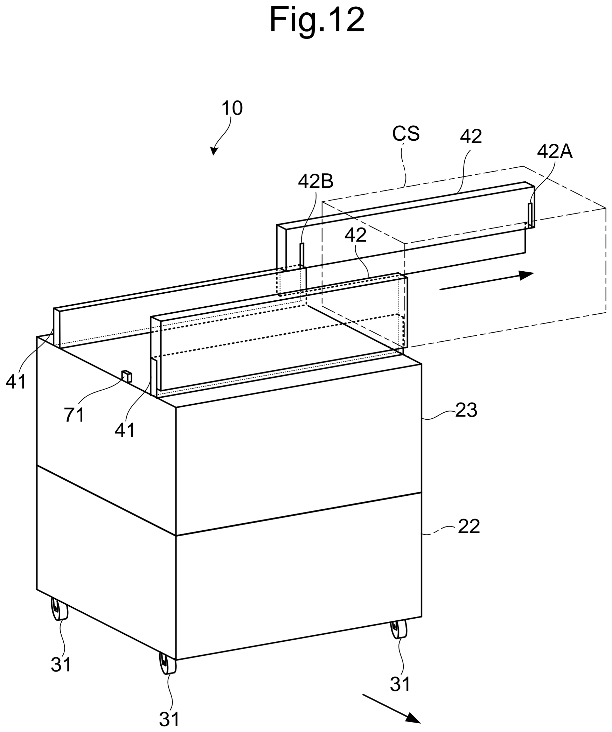

At this time, because the control device 74 sets the travel speed V of the automatic guided vehicle 10 to the travel speed VA faster than the transport speed VC of the case CS in the first conveyor 11A, the one arm 42 located on the upstream side in the transport direction of the case CS and projected to the space above the first conveyor 11A catches up with and comes into contact with the case CS as shown in FIGS. 11B and 12.

Moreover, a predetermined mark (such as a hole formed in the side surface or a predetermined image printed on the side surface, or a two-dimensional code Q) is provided on the side surface of the case CS facing the automatic guided vehicle 10 side. Because the imaging camera 71 is provided at a position facing the two-dimensional code Q capable of imaging the side surface of the case CS when the one arm 42 catches up with and comes into contact with the case CS, the two-dimensional code Q on the side surface of the case CS is located in the center of the image captured by the imaging camera 71 and the mark is imaged by the imaging camera 71 when the one arm 42 catches up with and comes into contact with the case CS.

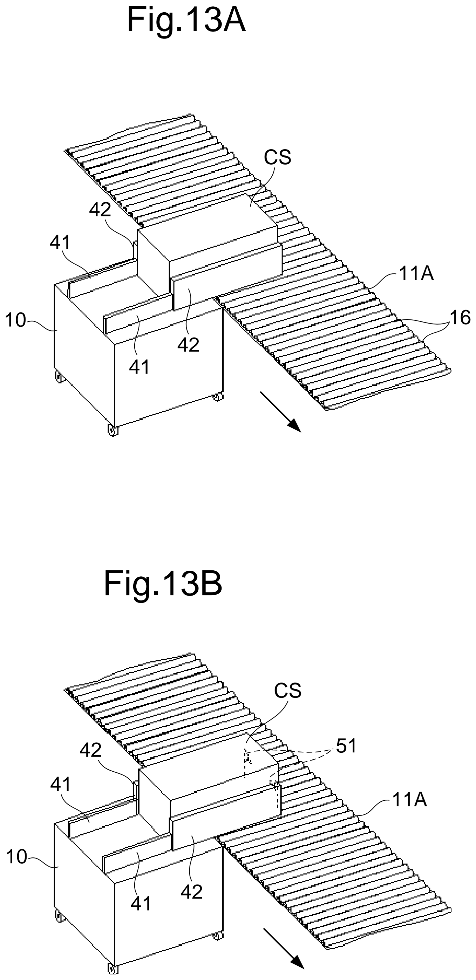

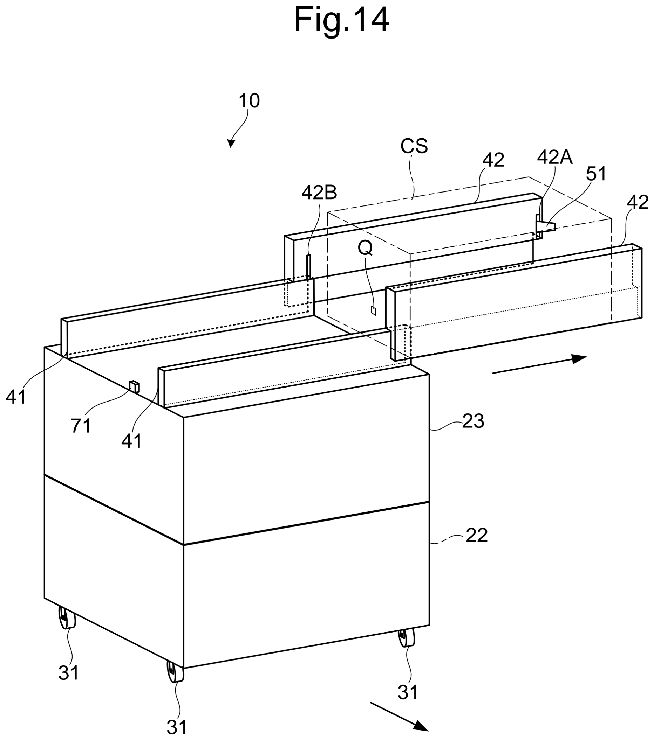

The control device 74 acquires the image captured by the imaging camera 71, analyzes this image, and determines that the one arm 42 has caught up with and come into contact with the case CS if an image showing the above-described mark is identified in the image (S104) and controls the driving of the arm drive motor 45 for driving the other arm 42 so that the other arm 42 located on the downstream side in the transport direction of the case CS is projected into the space above the first conveyor 11A as shown in FIG. 13A (S 105). Because a distance between the arms 42 is set to a distance equivalent to the width of the case CS, which is slightly longer than the width of the case CS, the case CS is sandwiched between the arms 42 according to the projection of the other arm 42. Moreover, according to this projection, each arm 42 projected under the control of the control device 74 has a length so that the distal end of the arm 42 reaches a position beyond the rear end of the case CS in the direction perpendicular to the transport direction of the case CS. The control device 74 projects the movable arm 42 until the distal end of the arm 42 reaches a position beyond the rear end of the case CS in this way (FIGS. 13A and 14).

Subsequently, the control device 74 controls the driving of each claw drive motor 55 so that the first claw device 51 on the inner side of the distal end of each arm 42 is projected as shown in FIGS. 13B and 14 (S106).

The two-dimensional code Q identified in S 104 includes information indicating a weight of stored objects stored in the case CS. This information may indicate the weight itself, or may indicate, for example, a weight of a single object that is stored and the number of stored objects. The control device 74 discriminates the weight of the stored objects on the basis of the above-described information and calculates a weight of an article by adding the known weight of the case CS to the weight of the stored objects (S 107). The above-described information may indicate the weight of the article itself, which is a sum of the weight of the stored objects and the known weight of the case CS. In this case, the control device 74 acquires the weight of the article directly from the above-described information.

At this time, the control device 74 controls the driving of the travel drive motors 33 of the drive wheels 32 so that the automatic guided vehicle 10 is allowed to travel at the travel speed VA set in S102. After S107, the control device 74 compares the weight of the article calculated in S 107 with a preset threshold value and maintains the travel speed V of the automatic guided vehicle 10 at the travel speed VA when it is determined that the weight of the article is less than the threshold value.

Moreover, if the weight of the article is greater than or equal to the above-described threshold value, the control device 74 reduces the travel speed V of the automatic guided vehicle 10 to a predetermined travel speed VD that is greater than or equal to the transport speed VC of the case CS in the first conveyor 11A and is slower than the travel speed VA set in S102 (S108). Thereby, when the weight of the article contained in the case CS is greater than or equal to the threshold value and is heavy, the travel speed V of the automatic guided vehicle 10 is reduced while being maintained at the transport speed VC or more of the case CS. Therefore, when the automatic guided vehicle 10 is traveling while the case CS is being pushed by the above-described one arm 42 that has been projected, because the load on each travel drive motor 33 can be reduced and the load from the case CS applied to the one arm 42 can also be reduced, the automatic guided vehicle 10 can be allowed to travel stably.

Furthermore, the control device 74 sets the rotational speed of each arm drive motor 45 in accordance with the weight of the article calculated in S107 (S109). For example, the control device 74 sets the rotational speed of each arm drive motor 45 to a slower speed as the weight of the article increases. For example, a data table indicating the weight of the article and the rotational speed of each arm drive motor 45 corresponding thereto for each article weight is stored in a ROM built into the control device 74. The control device 74 reads the rotational speed of each arm drive motor 45 corresponding to the weight of the article calculated in S107 from the data table, and sets the read rotational speed as the rotational speed of each arm drive motor 45 according to the weight of the article calculated in S107.

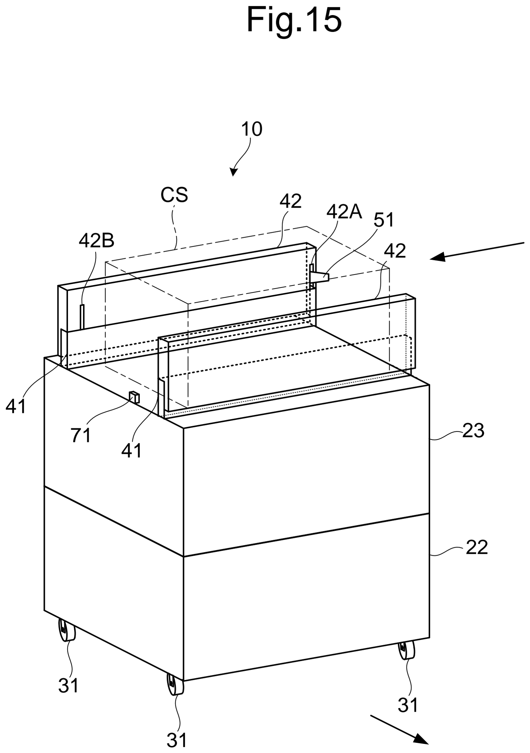

Also, the control device 74 controls the driving of each arm drive motor 45, rotates each arm drive motor 45 at the rotational speed set in S108, retracts each arm 42 from the space above the first conveyor 11A, and retracts each arm 42 from the position projected as described above into the area inside the working device 23 of the automatic guided vehicle 10 as shown in FIG. 15. When each arm 42 is retracted, each first claw device 51 is hooked on an end of the case CS and each arm 42 retracts the case CS from the first conveyor 11A to the working device 23 of the automatic guided vehicle 10 (S110). That is, the retraction of each arm 42 causes the case CS to move from a position on the first conveyor 11A onto the working device 23 of the automatic guided vehicle 10. Thereby, as the weight of the article increases, the movement speed of each arm 42 decreases. The case CS is transferred from the first conveyor 11A to the working device 23 of the automatic guided vehicle 10 at a slower speed. Therefore, when each arm 42 retracts the case CS into the working device 2 of the automatic guided vehicle 10, the load applied to each arm drive motor 45 can be reduced. Moreover, the movement of the case CS from its position on the first conveyor 11A to the working device 23 of the automatic guided vehicle 10 is performed in a state in which the transport operation of the first conveyor 11A and the traveling of the automatic guided vehicle 10 are continuing. However, because this movement is performed at a low speed, the case CS can be stably and reliably moved from its position on the first conveyor 11A onto the working device 23 of the automatic guided vehicle 10.

Subsequently, the control device 74 controls the driving of each of the claw drive motors 55 so that each of the first claw devices 51 is retracted and stored in the arm 42.

Furthermore, the control device 74 detects the position of the travel line 15 on the basis of the detection output of the travel line sensor 72, controls the driving of the travel drive motors 33 of the drive wheels 32 in accordance with the detected position of the travel line 15, and causes the automatic guided vehicle 10 to travel along the path of the first travel line 15A → the second travel line 15B → the third travel line 15C (S111).

When the automatic guided vehicle 10 travels to the position of the storage shelf 12, a two-dimensional code Q2 attached to each different position in the travel direction of the automatic guided vehicle 10 on the storage shelf 12 is imaged by the imaging camera 71. The control device 74 analyzes the imaged two-dimensional code Q2 and detects location information of the storage shelf 12 contained in the two-dimensional code Q2. The control device 74 receives the location information of the storage shelf 12 previously linked to the above-described ID via the communication device 73. When the two-dimensional code Q2 containing the location information matching the location information of the storage shelf 12 linked to the above-described ID is imaged, the control device 74 stops the automatic guided vehicle 10 at the position at this time, as shown in the example of FIG. 13 (S112). At this time, the automatic guided vehicle 10 has a posture in which the distal end of the arm 42 on which each first claw device 51 is provided faces the storage shelf 12 side according to a direction change at the time of a change in a path of the first travel line 15A → the second travel line 15B → the third travel line 15C.

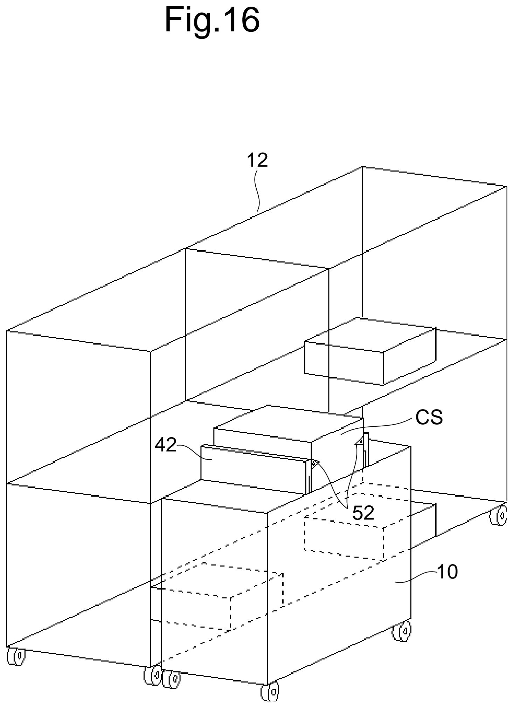

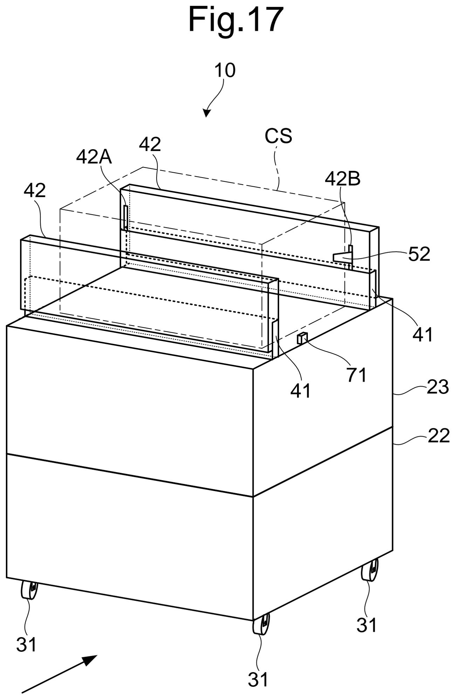

Here, the control device 74 controls the driving of each claw drive motor 56 so that the second claw device 52 on the inner side of the rear end of each arm 42 is projected as shown in FIGS. 16 and 17 (S113). At this time, the second claw device 52 on the inner side of the rear end of each arm 42 is located on the end side of the case CS that is the opposite side of the storage shelf 12.

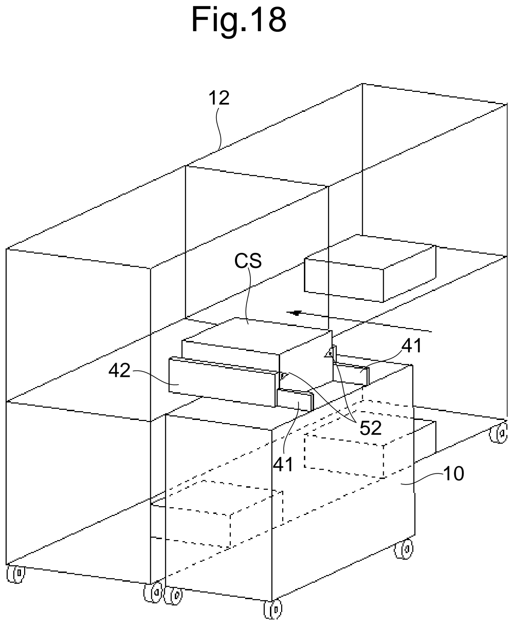

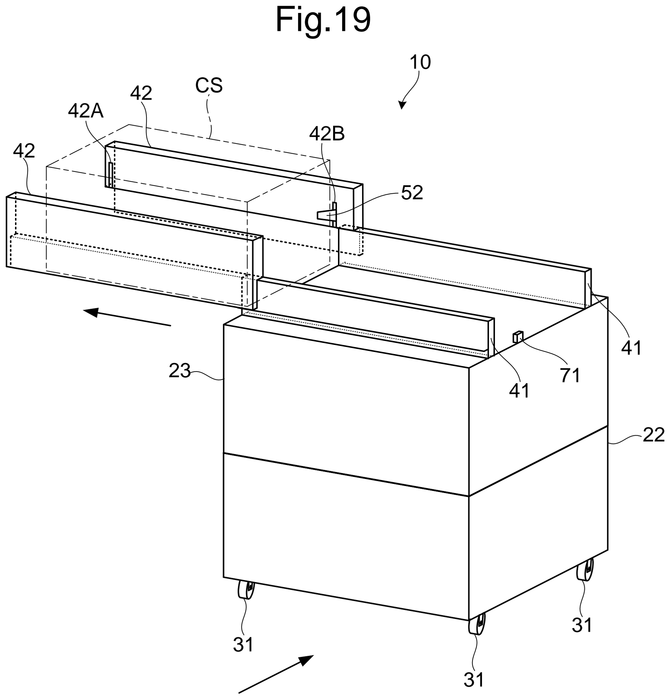

Subsequently, the control device 74 controls the driving of each arm drive motor 45 so that each arm 42 is projected toward the storage shelf 12 side as shown in FIGS. 18 and 19 (S114). An amount of projection at this time is set to an amount for allowing the second claw device 52 on the inner side of the rear end of each arm 42 to enter at least a position above the storage shelf 12. The slide rail 43 has a configuration in which the second rail is engaged and supported by the first rail, the second rail is guided in a movement direction according to the first rail, and the second rail also moves in the outward direction toward the storage shelf 12 side (a direction opposite to the outward direction toward the first conveyor 11A side shown in FIG. 6).

By projecting each of the arms 42 toward the storage shelf 12, each of the second claw devices 52 is hooked onto the case CS, the arms 42 and the second claw device 52 push the case CS from above the working device 23 of the automatic guided vehicle 10 into the storage shelf 12, and the case CS is moved from above the working device 23 of the automatic guided vehicle 10 to the storage shelf 12. Subsequently, the control device 74 controls the driving of each of the claw drive motors 56 so that each of the second claw devices 52 is retracted and each of the second claw devices 52 is stored in the arm 42.

The control device 74 detects a position of the travel line 15 on the basis of the detection output of the travel line sensor 72, controls the driving of the travel drive motors 33 of the drive wheels 32 in accordance with the detected position of the travel line 15 so that the automatic guided vehicle 10 is allowed to travel along the path of the third travel line 15C → the fourth travel line 15D → the first travel line 15A, and stops the travel drive motors 33 of the drive wheels 32 a certain time after the automatic guided vehicle 10 changes its travel direction by 90 degrees between the fourth travel line 15D and the first travel line 15A, and stops the automatic guided vehicle 10 at the waiting position HP (S115).

In the present embodiment as described above, if the first conveyor 11A starts the transportation of the case CS, the automatic guided vehicle 10 travels along the first travel line 15A in parallel to the first conveyor 11A, and one of the arms 42 located on the upstream side in the above-described transport direction is projected. At this time, the travel speed V of the automatic guided vehicle 10 is set to a travel speed VA faster than the transport speed VC of the case CS. If one arm 42 moves to the position of the case CS, the other arm 42 located on the downstream side in the transport direction is projected. Also, the case CS is sandwiched between the arms 42. In this state, the first claw device 51 on the inner side of the distal end of each arm 42 is projected, and each arm 42 is pulled back to the automatic guided vehicle 10. At this time, each of the first claw devices 51 is hooked on the case CS, and the case CS is pushed from the first conveyor 11A into the working device 23 of the automatic guided vehicle 10 by the arm 42 and the first claw devices 51, and moves onto the working device 23 of the automatic guided vehicle 10. Thereby, according to the present embodiment, while the automatic guided vehicle 10 is allowed to travel, the case CS being transported by the first conveyor 11A can be transferred to the automatic guided vehicle 10, and the case CS can be moved efficiently.

### <Modified Example 1>

In Modified Example 1, the working device 23 of the automatic guided vehicle 10 is raised and lowered in a vertical direction. For example, a plurality of posts are provided projecting from the travel device 22 of the automatic guided vehicle 10, and the working device 23 is supported by the respective posts so that the working device 23 is freely movable in the vertical direction, and the working device 23 is raised and lowered by a plurality of ball screws (a known mechanism). The ball screw includes a screw shaft that is rotatably supported by the travel device 22 and projects from it, and a nut that is fixed to the working device 23 and screwed onto the screw shaft. A lifting motor for rotating each screw shaft is provided in the travel device 22. Under the control of the control device 74, each lifting motor rotates each screw shaft to raise each nut and the working device 23 in one direction, and each lifting motor rotates each screw shaft in the opposite direction to lower each nut and the working device 23. Thereby, it is possible to raise and lower the working device 23 in accordance with heights of the conveyor device 11 and the storage shelf 12 even if the heights change and to transfer the case CS between the working device 23 and the conveyor 11 or the storage shelf 12.

### <Modified Example 2>

In Modified Example 2, a separation distance between the arms 42 is changed. For example, one of the support walls 41 of the working device 23 is supported to be slidable in a direction perpendicular to a longitudinal direction of each arm 42, a rack gear extending in a direction perpendicular to a lower end of one of the support walls 41 is provided, a pinion gear meshing with the rack gear is provided, and a motor for rotating the pinion gear back and forth is provided in the working device 23. Under the control of the control device 74, the pinion gear is rotated back and forth by the motor to reciprocate the rack gear, and one of the support walls 41 and the arm 42 is moved toward and away from the other support wall 41 and the arm 42, thereby changing the separation distance of each arm 42. Thereby, even if the width of the case CS changes, it is possible to sandwich the case CS between the arms 42 and transfer the case CS between the working device 23 and the conveyor device 11 or the storage shelf 12.

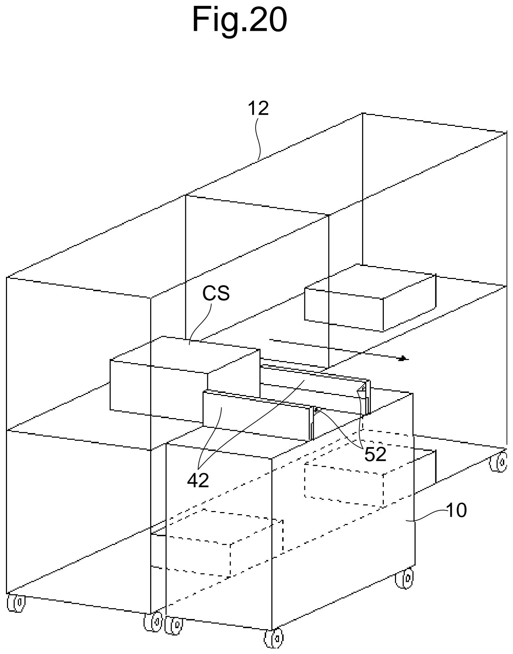

Furthermore, the configurations and processes of the above-described embodiments described using FIGS. 1 to 20 are merely embodiment examples of the present invention and the present invention is not limited to these configurations and processes. For example, in the above-described embodiment, an embodiment example in which the automatic guided vehicle 10 takes in the case CS being transported on the conveyor device 11 and stores the case CS on the storage shelf 12 has been described. However, the control device 74 may be configured to control the driving of the travel drive motor 33, the arm drive motor 45, the claw drive motor 55, and the claw drive motor 56 to operate the arm 42, the first claw device 51, the second claw device 52, and the imaging camera 71, so that the automatic guided vehicle 10 takes in the case CS stored on the storage shelf 12 to place the case CS onto the automatic guided vehicle 10, transports the case CS to a position of the conveyor device 11, and transfers the case CS from the automatic guided vehicle 10 onto the conveyor device 11.

## Claims

1. An automatic guided vehicle comprising:
a plurality of casters and a plurality of drive wheels in contact with a travel surface, each of the casters being arranged at a location on a bottom of a vehicle body and movably supporting the vehicle body on the travel surface, shafts of the drive wheels being aligned in one direction and spaced apart from each other on the bottom of the vehicle body, each of the drive wheels being rotationally driven at a rotational speed in a rotation direction;
a travel drive device configured to cause the automatic guided vehicle to travel according to each drive wheel by rotating the drive wheels; and
a control device configured to control the travel drive device so that each of the drive wheels rotates at the rotational speed in the rotation direction.

2. The automatic guided vehicle according to claim 1, wherein the shafts of the drive wheels are aligned in the one direction and spaced apart from each other at four locations and four drive wheels are provided.

3. The automatic guided vehicle according to claim 2, wherein, in a travel direction of the automatic guided vehicle, each of the drive wheels is disposed in a central portion between a front caster in the travel direction and a rear caster in the travel direction.

4. The automatic guided vehicle according to claim 1,
wherein support members and biasing members are provided on the bottom of the vehicle body,
wherein the support members are rotatably supported around support shafts parallel to the shafts of the drive wheels and support the shafts of the drive wheels, and
wherein the biasing members bias the support members toward the travel surface on an opposite side of the support shafts when seen from the shafts of the drive wheels and cause the drive wheels to come into contact with the travel surface in a state in which the automatic guided vehicle is arranged on the travel surface via the casters.

5. The automatic guided vehicle according to claim 4,
wherein the shafts of the drive wheels are aligned in the one direction and spaced apart from each other at four locations and four drive wheels are provided,
wherein two frame members extending parallel to the shafts of the drive wheels and stretching parallel to each other on the bottom of the vehicle body are provided in a central portion between a front caster in a travel direction of the automatic guided vehicle and a rear caster in the travel direction of the automatic guided vehicle,
wherein each of the support members supporting the two drive wheels provided in the central portion in the one direction has one end where the support shaft is pivotably supported on one of the two frame members and the other end attached to the other of the two frame members by the biasing member, and
wherein each of the support members supporting the two drive wheels provided on both outer sides of the two drive wheels provided in the central portion in the one direction has one end where the support shaft is pivotably supported on the other of the two frame members and the other end attached to the one of the two frame members by the biasing member.

6. The automatic guided vehicle according to claim 1, further comprising:
a travel drive device configured to cause the automatic guided vehicle to travel by rotating the drive wheels of the automatic guided vehicle;
a pair of arms provided at positions on the automatic guided vehicle on a downstream side and an upstream side in a direction in which an article is transported by a conveyor when the automatic guided vehicle travels along the conveyor and configured to extend in a direction perpendicular to the direction in which the article is transported, face each other at positions spaced apart by a distance corresponding to a width of the article in the direction in which the article is transported by the conveyor, reciprocate in the perpendicular direction to project outward from the automatic guided vehicle, and retract into the automatic guided vehicle from a projected position;
an arm drive device configured to cause each of the arms to reciprocate in the perpendicular direction;
first claw devices provided on distal-end sides of the pair of arms and configured to project from arm portions at the distal-end sides to a space between the arms and retract into the arm portions;
a first claw drive device configured to cause each of the first claw devices to perform projecting and retracting actions; and
a control device configured to control the travel drive device, the arm drive device, and the first claw drive device so that the automatic guided vehicle is allowed to travel along the conveyor at a travel speed faster than a transport speed of the article, the arm provided on the upstream side is allowed to project above the conveyor from the automatic guided vehicle, the arm provided on the downstream side is projected above the conveyor from the automatic guided vehicle when the arm provided on the upstream side in the transport direction moves to a position of the article being transported by the conveyor, and each arm is retracted from above the conveyor into the automatic guided vehicle after each first claw device is projected from the distal-end side of each of the arms to the space between the arms in a state in which the article is located between the arms.

7. The automatic guided vehicle according to claim 6, further comprising:
second claw devices provided on rear-end sides of the pair of arms and configured to project from the arm portions on the rear-end sides to the space between the arms and retract into the arm portions; and
a second claw drive device configured to cause each of the second claw devices to perform the projecting and retracting actions,
wherein the control device controls the arm drive device and the second claw drive device so that the second claw devices are projected from the arm portions on the rear-end sides of the arms to the space between the arms and the arms are projected outward from within the automatic guided vehicle.

8. An automatic guided vehicle system comprising:
the automatic guided vehicle according to claim 1; and
a conveyor configured to load and transport an article,
wherein the automatic guided vehicle includes
a travel drive device configured to cause the automatic guided vehicle to travel by rotating the drive wheels of the automatic guided vehicle;
a pair of arms provided at positions on the automatic guided vehicle on a downstream side and an upstream side in a direction in which the article is transported by the conveyor when the automatic guided vehicle travels along the conveyor and configured to extend in a direction perpendicular to the direction in which the article is transported, face each other at positions spaced apart by a distance corresponding to a width of the article in the direction in which the article is transported by the conveyor, reciprocate in the perpendicular direction to project outward from the automatic guided vehicle, and retract into the automatic guided vehicle from a projected position;
an arm drive device configured to cause each of the arms to reciprocate in the perpendicular direction;
first claw devices provided on distal-end sides of the pair of arms and configured to project from arm portions at the distal-end sides to the space between the arms and retract into the arm portions;
a first claw drive device configured to cause each of the first claw devices to perform projecting and retracting actions; and
a control device configured to control the travel drive device, the arm drive device, and the first claw drive device so that the automatic guided vehicle is allowed to travel along the conveyor at a travel speed faster than a transport speed of the article, the arm provided on the upstream side is allowed to project above the conveyor from the automatic guided vehicle, the arm provided on the downstream side is projected above the conveyor from the automatic guided vehicle when the arm provided on the upstream side in the transport direction moves to a position of the article being transported by the conveyor, and each arm is retracted from above the conveyor into the automatic guided vehicle after each first claw device is projected from a distal-end side of each of the arms to a space between the arms in a state in which the article is located between the arms.

9. The automatic guided vehicle system according to claim 8,
wherein the automatic guided vehicle further includes
second claw devices provided on rear-end sides of the pair of arms and configured to project from the arm portions on the rear-end sides into the space between the arms and retract into the arm portions; and
a second claw drive device configured to cause each of the second claw devices to perform the projecting and retracting actions, and
wherein the control device controls the arm drive device and the second claw drive device so that the second claw devices are projected from the arm portions on the rear-end sides of the arms to the space between the arms.
